(19) Europäisches Patentamt
European Patent Office
Office européen des brevets

(11) EP 3 872 485 A1

(12) **EUROPEAN PATENT APPLICATION**

(43) Date of publication:
**01.09.2021 Bulletin 2021/35**

(51) Int Cl.:
***G01N 27/404*** *(2006.01)* ***G01N 27/327*** *(2006.01)*

(21) Application number: **20382133.5**

(22) Date of filing: **25.02.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Universitat Rovira I Virgili**
**43003 Tarragona (ES)**

(72) Inventors:
- **ANDRADE, Francisco Javier**
  **43007 Tarragona (ES)**
- **BLANKING, Pär Robert Erik William**
  **43007 Tarragona (ES)**
- **BLONDEAU, Pascal**
  **43007 Tarragona (ES)**
- **HOEKSTRA, Rafael Wytze Fenwick**
  **43007 Tarragona (ES)**
- **BAEZ VASQUEZ, Jhonattan Frank**
  **43007 Tarragona (ES)**

(74) Representative: **Hoffmann Eitle**
**Hoffmann Eitle S.L.U.**
**Paseo de la Castellana 140, 3a planta**
**Edificio LIMA**
**28046 Madrid (ES)**

(54) **POTENTIOMETRIC HYDROGEN PEROXIDE SENSOR**

(57) Potentiometric detection of hydrogen peroxide or phosphate related compounds in test or clinical samples wherein a polyelectrolyte (e.g. NAFION) is sandwiched between the working and reference electrode. Furthermore, glucose can be detected by incorporating glucose oxidase in a proton exchange membrane (e.g. NAFION) and depositing said membrane on the working electrode surface facing the sample.

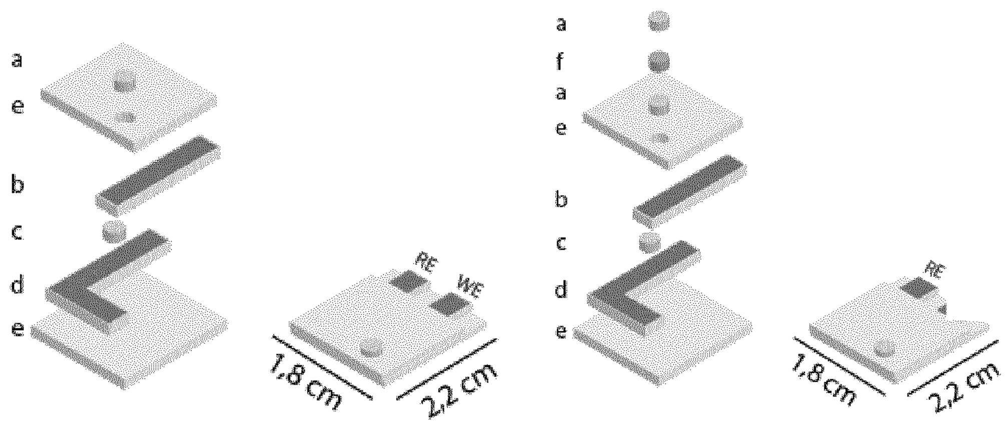


**Fig. 1**

EP 3 872 485 A1

## Description

### Technical field of the invention

The present invention pertains to the medical field, particularly to the detection of hydrogen peroxide or phosphate related compounds in test or clinical samples by using potentiometric sensors. More particularly, the present invention solves the problem of providing potentiometric sensor devices for the detection of chemical species in solution with a novel configuration.

### Background of the invention

In the traditional approach and for the detection of chemical species in solution by using potentiometric sensors or cells, and as reflected in figure 5, two electrodes must be in contact with the solution, in particular the working electrode and the reference electrode must be in contact with the solution. Such requirement makes these systems very dependent on the correct selection of the working and the reference electrodes used for the system to efficiently work.

However, in the present invention, instead of using a solution to close the circuit between the two electrodes (the working electrode (WE) and the reference electrode (RE), the results presented herein confirm that a potentiometric cell can use a polyelectrolyte bridge, such as a Nafion polyelectrolyte bridge, to connect the WE and RE instead of the solution, and that such polyelectrolyte bridge effectively closes the circuit and allows detecting the chemical species, such as $H_2O_2$, or phosphate related compounds in solution. Such a system is not as dependent on the selection of a very specific reference electrode and can be easily miniaturize. To the best of our knowledge, this is the first report for this kind of configuration for the detection of chemical species in solution, a schematic view of such configuration is provided in figure 6.

### Description of the invention

As already indicated, in the present invention, instead of using a solution to close the circuit between the two electrodes (the working electrode (WE) and the reference electrode (RE), the results presented herein confirm that a potentiometric cell can use a polyelectrolyte bridge, such as a Nafion polyelectrolyte bridge, to connect the WE and RE instead of the solution, and that such polyelectrolyte bridge effectively closes the circuit and allows detecting the chemical species, such as $H_2O_2$, or phosphate related compounds in solution. To the best of our knowledge, this is the first report for this kind of configuration for the detection of chemical species in solution, a schematic view of such configuration is provided in figure 6.

Therefore, a first aspect of the invention refers to a potentiometric cell suitable for selectively measuring chemical species such as hydrogen peroxide or phosphate related compounds in solution, which comprises:

a. A reference electrode comprising a support which in turn comprises a conductive material such as silver, platinum, gold, nickel, zinc, copper, aluminum or carbon; and

b. A hydrogen peroxide selective electrode comprising a porous redox sensitive surface consisting of platinum or gold or a phosphate related compounds selective electrode comprising a porous redox sensitive surface consisting cobalt;

wherein the electrodes are positioned directly above the other, and wherein each of the electrodes is connected to the other by a polyelectrolyte bridge provided between the electrodes.

It is noted that, normally, the working electrode should be positioned directly above the reference electrode.

A preferred embodiment of the invention refers to a potentiometric cell suitable for selectively measuring hydrogen peroxide in solution, which comprises:

a. A reference electrode comprising a support which in turn comprises a conductive material such as silver, platinum, gold, nickel, zinc, copper, aluminum or carbon; and

b. A hydrogen peroxide selective electrode comprising a porous redox sensitive surface consisting of platinum or gold;

wherein the electrodes are positioned directly above the other, and wherein each of the electrodes is connected to the other by a polyelectrolyte bridge provided between the electrodes.

In another preferred embodiment, the potentiometric cell has two electrodes, the working electrode and the reference electrode, one positioned directly above the other, wherein the surfaces of each of the electrodes that contact

the polyelectrolyte bridge provided between the electrodes, permits to effectively close the circuit allowing the detection of the chemical species.

In yet another embodiment, the polyelectrolyte bridge connecting the electrodes comprises or is made of polyelectrolytes such as perfluorosulfonic acid ionomers or polyammonium ionomers. Preferred polyelectrolytes are those selected from the list consisting of Nafion, Polyethylenimine (PEI) or polyaziridine, wherein polyaziridine is a polymer with repeating units composed of the amine group and two carbon aliphatic CH2CH2 spacer.

In a preferred embodiment of the invention, two PFSA (Perfluorosulfonic acid) ionomers in the acid form can be preferably used for the polyelectrolyte bridge: a long side chain PFSA; Nafion™ NR-40 with an Equivalent Weight EW=1000 g/eq, or a short side chain PFSA Aquivion™ with EW=830 g/eq.

Perfluorosulfonic acid (PFSA) ionomers are polymers having a chemical moiety of the Formula (I):

(I)

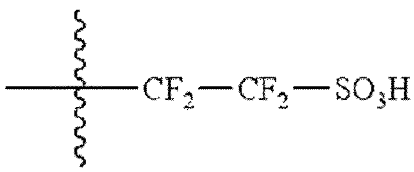

A preferred class of perfluorosulfonic acid ionomers are PFSA-polytetrafluoroethylene copolymers of Formula (II),

(II)

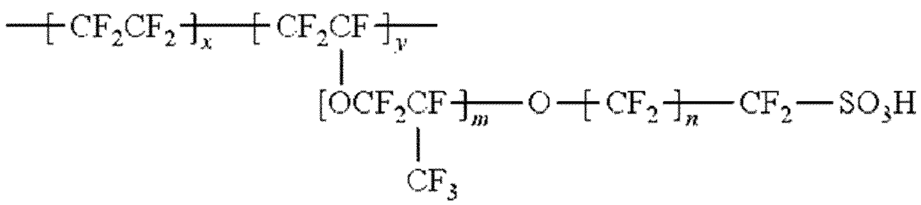

where x, y, m and n represent the numbers of repeat units. x and y are the numbers for tetrafluoroethylene and perfluorosulfonic acid repeat units respectively and m and n are the repeat units in the side chains of perfluorosulfonic acid blocks. x and y are equivalent weight dependent. For Nafion™ ionomer, a PFSA known in the art, the relationship between equivalent weight (EW) and m is EW=100x+446 so that the side chains are separated by around 14 $CF_2$ units in an ionomer with EW=1100. Preferably, the number of repeat units x and y are such that there are less than 15 × units for each y and the value of m and n are integers between 0 and 5. Examples of PFSA copolymers known in the art are Nafion™: m=1 and n=1, Flemion™: m=0 or 1 and n=1 to 5, Aciplex™: m=0 or 3 and n=2 to 5, 3M™ ionomer: m=0 and n=2, Aquivion™: m=0 and n=1.

In the present invention, the mixed potential (MP) of the Pt electrode is used to explain the potentiometric response to hydrogen peroxide or to phosphate related compounds, and the use of specific polyelectrolyte coatings is herein presented as a way to control the kinetic processes that lead to the resting potential of the electrode (Baez et al. Analytica Chimica Acta 1097 (2020) 204-213). It is well known that -like with many other metals- the resting potential of a Pt electrode in an electrolyte solution is not under equilibrium, but under a mixed potential (MP) regime, where oxidation (electron-generating) and reduction (electron-scavenging) reactions create anodic ($i_a$) and cathodic ($i_c$) exchange currents. Each one of these currents can be described by their Butler-Volmer equation:

$$i_k = i_k^o\left(e^{\frac{\alpha_k n_k F \eta_k}{RT}} - e^{\frac{(1-\alpha_k) n_k F \eta_k}{RT}}\right)$$

where the subscript "k" identifies a given reaction, $i_k$ is the total current, $i_k^o$ is the exchange current density, $\alpha_k$ is the symmetry factor, $n_k$ is the number of electrons exchanged in the rate-limiting step. The driving force of the reaction -the overpotential ($\eta_k$)- is the difference between the resting potential of the electrode ($E$) and the equilibrium potential of the reaction $(E_k^o)$ under study, and *F, R* and *T* are the Faraday's constant, universal gas constant and the absolute temperature, respectively. For large enough overpotential one of the directions of the reaction becomes negligible, i.e., the cathodic component of the anodic exchange current and the anodic component of the cathodic exchange current can be ignored. Therefore, the above equation can be then reduced to the Tafel approximation. Assuming that only one reaction contributes to each process, exchange currents can be expressed as:

$$i_a = i_a^o e^{\frac{\alpha_a n_a F \eta_a}{RT}}$$

$$i_c = i_c^o e^{\frac{(1-\alpha_c) n_c F \eta_c}{RT}}$$

When the value of potential is evaluated for the condition $i_a^o + i_c^o = 0,$ the MP of the system can be obtained. Then, under a MP regime there is a net non-zero value of overpotential ($\eta$) that reaches a steady state due to a zero-value of the total current. Because of this, the OCP of these system does not show a Nernstian dependence, but it is controlled by the Tafel relationships that describe the exchange currents. Tafel equations are often expressed in the linear form:

$$E_a = K_a + \beta_a \log(i_a),\ \beta_a = 2.303 \frac{RT}{\alpha_a n_a F}$$

$$E_c = K_c + \beta_c \log(i_c), \beta_c = 2.303 \frac{RT}{(1-\alpha)_c n_c F}$$

where $E_a$ and $E_c$ are the electrode potential calculated for the anodic or cathodic exchange currents, $K_a$ and $K_c$ include a series of parameters and constant terms for each reaction and $\beta_a$ and $\beta_c$ are the Tafel slopes for the anodic and cathodic processes. Typically, for $\alpha$=0.5, expected Tafel slopes are 120 and 60 mV for one-electron and 2-electron transfer, respectively. However, additional factors that lead to more complex reaction mechanisms require corrections to the Tafel equation that result in a wider range of slopes.

Tafel slopes are key to understand the potentiometric response of these MP systems, since the OCP is linked to changes of the exchange currents. Any perturbation that leads to the readjustment of the exchange currents will result in a change of the electrode potential according to their Tafel plots, such as the exposure of the WE to the solution containing the chemical entity to be tested. This is the reason why the OCP of many metal electrodes -including Pt-respond to the dissolved oxygen concentration. The oxygen reduction reaction (ORR):

$$O_2 + 4H^+ + 4e^- \rightarrow 2H_2O\ (E° = 1.23\ V)$$

is one of the main contributors to the $i_c$ in the MP of many metals. Thus, changes on the concentration of $O_2$ modify $i_c$, forcing the system to reach a new MP. The sensitivities for dissolved $O_2$ -120 mV/decade for some bronzes, 40mV/decade for Co, and it 56 to 80 mV/decade for Cu- reflect the different kinetic conditions of this reaction, that yield different Tafel slopes. While the use of these metals as dissolved oxygen sensors has been proposed, a strict control over other factors affecting the exchange current -such as blocking the active sites on the electrode, modifications of the surface, adsorptions, etc is required. For example, a potentiometric phosphate sensor based on the modifications of the exchange currents produced by phosphate anions on a cobalt oxide surface has been reported. This is one of the major powers -and also the major weakness- of these mixed potential systems. From one side, they can offer great versatility, and potentially great sensitivity. From the other, they show strong dependence on several environmental factors that must be carefully controlled to be analytically useful.

In the case of Pt electrodes, the 2 major factors to consider when analyzing the MP are the cathodic and anodic exchange current, from one side, and the surface condition, from the other. Regarding the cathodic process, the strong dependence of the OCP with the concentration of dissolved $O_2$ evidences the major contribution of the ORR to the $i_c$. As a reduction reaction, the ORR acts removing electrons. Thus, a decrease of the ORR rate is reflected as drop of the electrode potential. Conversely, increasing the rate of this reaction drives the potential to higher values. The anodic reaction, on the other hand, is usually associated with the oxidation of Pt on the surface of the electrode. It has been reported that this reaction has a very low Tafel slope, which in practical terms means that the OCP of the Pt electrode

will be mostly controlled by the cathodic process. Thus, Tafel slopes of the ORR will play a key role determining the sensitivity of the OCP. What is more relevant about the anodic process, though, is that it generates a layer of PtO, which inhibits the ORR, as it will be discussed below.

The ORR on Pt has received significant attention during the last decades because it is the limiting factor in the improvement of the performance of fuel cells (I Katsounaros, WB Schneider, JC Meier, U Benedikt, PU Biedermann, AAAuer, KJJ Mayrhofer, Phys. Chem. Chem. Phys., 2012, 14, 7384). The actual mechanism of the reaction is not fully elucidated, and the evidence suggest that different reaction pathways may occur depending on the conditions. The ORR on Pt is sluggish and does not proceed in a reversible way. As a multi-electron reaction, the ORR includes a number of elementary steps with different intermediaries (NM markovic, PN Ross Jr, Surface Science Reports 2002, 45, 117). Oxygen may be directly reduced to water (the 4-electron pathway) or be first reduced to hydrogen peroxide, which in turn may undergo different reactions. The most recent models and experimental evidence suggest that the mechanism of the ORR involves a first step of adsorption of $O_2$ onto Pt. Then a one-electron transfer is the rate-limiting step. Under these conditions, a Tafel slope of 120mV/decades (Markovic et al.) can be expected. Nevertheless, a number of factors may affect the reaction kinetics. Therefore, Tafel slopes of 60 and 120 mV/decade are typically reported, but values ranging from 40 to 80 mV/decade can be also found.

Since the first step of the reaction is the adsorption of $O_2$, the surface condition of the Pt electrode has a strong influence on the MP. Competitive adsorption of species on Pt has been studied by Markovic and Ross, who evaluated the ORR in the presence of sulphate and chloride anions. The effect of this spectator species on Pt has been also recently reviewed. In general, the adsorption of anions on the surface of the metal blocks the adsorption of oxygen, decreasing the ORR, and therefore affecting the MP. Evidently, from an analytical standpoint, this is a severe limitation for the use of bare Pt electrodes in solution, since the matrix will produce a significant and variable degree of interference.

Some of the most severe inhibitory effect on the ORR is produced by the presence of oxygenated species. The absorption of hydroxide groups, for example, blocks the active sites for the ORR. For this reason, a key factor controlling the electrochemical behavior of Pt is the surface oxide coverage. It has been long known that a clean Pt surface immersed in an aqueous solution is unstable, and it quickly oxidizes the first layers of metal until a stable potential is reached. Thus, Pt presents a potential-dependent surface oxide coverage, which has an inhibitory effect on the ORR, since $O_2$ requires clean Pt sites to adsorb. The generation of this oxide layer part of the mixed potential, since it is involved in the $i_a$. The anodic processes have traditionally received less attention, probably due to the lower kinetic impediments that it presents show. The metal oxidation:

$$2Pt + O_2 \rightarrow 2PtO \ (E° = 0.88)$$

is a fundamental part of the chemistry of Pt in aqueous solutions, as evidences in the cyclic voltagrams with Pt electrodes (figure 5).

Summarizing, the OCP of a Pt electrode (or a gold or cobalt electrode) is produced by a MP mechanism, where the ORR plays a fundamental role. Under ideal conditions, the kinetics of the ORR is controlled by the oxygen adsorption on free Pt sites available (and/or the change on the energy for adsorption of reaction intermediaries) followed by one electron transfer yield a Tafel slope of 120 mV. Nevertheless, surface effect will play an important role inhibiting the ORR. In particular, a potential-dependent surface oxide coverage will have a critical influence, since the total quantity and nature of the surface oxide species being reduced (degree of surface oxidation) has influence on the measured potential. Oxide-coverage factors have also been used to explain values of Tafel slopes below 120 mV/decades.

Interestingly, one of the oxygenated species that may block the ORR is the hydrogen peroxide. This molecule, which can be also found as intermediary in the ORR (depending on the reaction conditions) is weakly adsorbed in the surface on Pt, blocking free, active sites. Katsounaros has stressed the non-electrochemical nature of the interaction of peroxide with Pt. The OCP of a bare Pt electrode before and after the addition of peroxide produces a drop of the electrode potential. The drop of the electrode potential is the result of the blocking of the ORR, and not a redox reaction, as it has been previously proposed. While in principle this response could be used with analytical purposes, it is clear that the influence of the media would have a major effect on the response. Any increase on the concentration of anions will lead to a higher degree of adsorption of foreign species and a decrease on the response.

Last, but not least, a characteristic of the MP is that there is a continuous generation and consumption of chemical species at the surface of the electrode, which make these systems highly dependent on the mass transport phenomena. **Any analytically useful approach would optionally improve by stabilizing the concentration of gradients on the surface of the electrode and minimize the interference effect of foreign species.**

Therefore, a second aspect of the invention refers to a potentiometric cell suitable for selectively measuring hydrogen peroxide or phosphate related compounds in solution, which comprises:

a. A reference electrode comprising a support which in turn comprises a conductive material such as silver, platinum, gold, nickel, zinc, copper, aluminum or carbon; and

b. A hydrogen peroxide selective electrode comprising a porous redox sensitive surface consisting of platinum or gold and at least one layer of a proton exchange membrane on said redox sensitive surface; or a phosphate related compounds selective electrode comprising a porous redox sensitive surface consisting cobalt and at least one layer of a proton exchange membrane on said redox sensitive surface,

wherein the electrodes are positioned directly above the other, and wherein each of the electrodes is connected to the other by a polyelectrolyte bridge provided between the electrodes; and
wherein said layer of a proton exchange membrane comprises a copolymer of Formula (II),

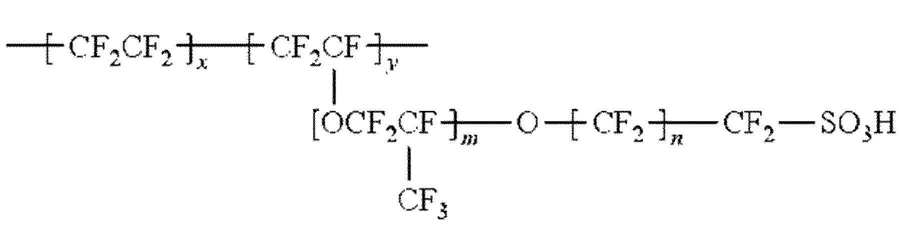

(II)

wherein x, y, m and n represent the numbers of repeat units, wherein m=0, n=1 and wherein the number of repeat units x and y are such that there are less than 15x units for each y.

Such layer of a proton exchange membrane **aids at stabilizing the concentration of gradients on the surface of the electrode and minimize the interference effect of foreign species.**

In a preferred embodiment of the second aspect of the invention or of any of its preferred embodiments, said layer of a proton exchange membrane further comprises or conforms a mixture with a further PFSA copolymer selected from those of formula II wherein m=1 and n=1, or m=0 or 1 and n=1 to 5, or m=0 or 3 and n=2 to 5, or m=0 and n=2, and wherein x and y are such that there are less than 15x units for each y.

In yet another preferred embodiment of the second aspect of the invention or of any of its preferred embodiments, said layer of a proton exchange membrane further comprises a glucose oxidase entrapped therein or any oxidase with hydrogen peroxide as its product.

On the other hand, a third aspect of the invention refers to a potentiometric cell capable of selectively measuring hydrogen peroxide in solution comprising a selective electrode and a reference electrode, wherein the selective electrode comprises a redox sensitive surface consisting of platinum or gold and optionally at least one layer of a proton exchange membrane on said redox sensitive surface as defined in the first or second aspect of the invention or in any of its preferred embodiments. Preferably, said hydrogen peroxide potentiometric cell comprises:

a. A reference electrode comprising a conductive material such as Ag/AgCl onto which a membrane comprising sodium chloride and PVB dissolved in an appropriate solvent such as methanol is deposited; and

b. A hydrogen peroxide selective electrode comprising a redox sensitive surface consisting of platinum or gold and at least one layer of a proton exchange membrane on said redox sensitive surface as defined in the first aspect of the invention or in any of its preferred embodiments.

It is noted that PVB or Butvar B-98 is understood as polyvinyl butyryl having a molecular weight between 40000-70000 g/mol with butyryl content between 78 and 80% weight per total weight of the polyvinyl butyryl (w/w), hydroxyl content between 18 and 20% (w/w) and acetate less than 2.5%, preferably between 1.5 and 2.5% (w/w).

In addition, a fourth aspect of the invention refers to the in vitro use of the hydrogen peroxide or phosphate related compounds potentiometric cell of any of the previous aspects of the invention or of any of its preferred embodiments, to selectively and directly determine the concentration of hydrogen peroxide or phosphate related compounds in an aqueous solution. Preferably, said aqueous solution is a biological fluid such as whole blood, preferably undiluted whole blood, intracellular fluids, saliva, cerebrospinal fluid, blood sera, blood plasma, sweat and urine. More preferably, said aqueous solution is whole blood, in particular undiluted whole blood. It is particularly important to highlight that such use, according to the novel configuration, allows detection in reduced volume such as shown in Figure 2 right. The use is preferably performed in a single drop, of preferably 50 $\mu$L, reducing the volume 2 order of magnitude. Noteworthy further reduction of volume down to the single $\mu$L is possible based on the geometry optimization. The drop use for the detection does not have to create a bridge between the two electrodes, however, it must be in contact with at least the working electrode.

Furthermore, a fifth aspect of the invention refers to the in vitro use of the hydrogen peroxide potentiometric cell of any of the previous aspects one to three of the invention or of any of its preferred embodiments, wherein said

potentiometric cell preferably comprises a support made of paper which in turn comprises the selective electrode and the reference electrode, thus providing a paper-based sensor. It is however noted that other supports such as plastic, rubber, and textile can be used to practice the present invention. It is, of course, further noted that such paper-based sensors can be used to selectively and directly determine the concentration of hydrogen peroxide in an aqueous solution, wherein preferably said aqueous solution is a biological fluid such as whole blood, preferably undiluted whole blood, intracellular fluids, saliva blood sera and urine. In particular, said selective and direct determination of the concentration of hydrogen peroxide in an aqueous solution in turn determines the concentration of glucose, galactose, cholesterol, uric acid, lactic acid and amino acid in said solution.

The following examples merely illustrate the present invention and do not limit the same.

**Brief description of the figures**

**Figure 1:** Paper-based sensor configuration for hydrogen peroxide detection (right) and for glucose detection (left) a. Nafion® 5% membrane, b. Pt sputtered paper strip, c. Nafion® 10% d. Conductive paper strip, e. Plastic mask. f. GOx enzyme. In the left are the components of the sensor, and in the right the assembled sensor.

**Figure 2:** Response time of a sensor to concentration of hydrogen peroxide (logarithmic units) in PBS: left) time 2500 to 4000s refers to a sensor in a cell of 5 mL volume and right) time 4500 to 6500s refers to a single drop of 50 μL volume.

**Figure 3:** calibration curve of a sensor (corresponding to data from Figure 2) blue data obtained in solution (PBS 5 mL) and in drop (PBS 50 uL)

**Figure 4:** a) Time trace of glucose sensor and b) corresponding calibration curve in PBS (5 mL).

**Figure 5:** Traditional approach and for the detection of chemical species in solution by using potentiometric sensors.

**Figure 6.** A schematic view of such proposed configuration.

**Examples**

**Materials and methods**

In this invention, a new cell geometry using metal-sputtered papers in working and reference electrodes, and a Nafion membrane as a conductive media, is applied in the construction of a paper- based potentiometric all-solid-state sensor for hydrogen peroxide detection, i.e. the biomarker of the oxidase enzyme reaction as well as, for glucose as a model biomarker.

**Experimental section**

Reagents. Nafion® 117 solution (10% in a mixture of lower aliphatic alcohols and water); glucose oxidase (GOx) (from Aspergillus niger type X-S, lyophilized powder (100,000 - 250.000 units/g) D-glucose); hydrogen peroxide (30 wt. % in water) and D-Glucose (Glu) were purchased from Sigma-Aldrich. Phosphate buffer saline (PBS) pH=7.4 (0.1 M NaCl, 0.003 M KCl, 0.1 M Na2HPO4, 0.02 M K2HPO4) were prepared using 18.2 MΩ cm-1 double deionized water (Milli-Q water systems, Merck Millipore).

Sputtered platinum paper. Whatman® Grade 5 qualitative filter paper circles were coated with Pt using a radiofrequency sputtering process (ATC Orion 8-HV, AJA International) operated at 3 mTorr, for 65 s at 200 W.

Paper sensor construction (Figure 1). two conductive paper strips are used, namely: the upper strip (made with a Pt sputtered paper) acts as WE (working electrode); the lower strip is a conducting paper that acts as reference electrode (RE). WE and RE are glued using a drop of Nafion® 10% (sandwiched between the plastic masks). Finally, a drop of Nafion® 5 % is located over the electrochemically active window, covering the exposed area of the WE. In all cases the conductive paper strips were cut with a width of 0.4 cm.

## Results

### Hydrogen peroxide detection in solution and in drop

Figure 2 shows the response and calibration curve for the novel sensors to the addition of H2O2 in PBS (5 mL cell). The bridge indeed connects the working to the reference electrode (Nafion solution). The additions give a negative response (from -7 to -1) with a sensitivity of -90 mV per decade in the linear range from -5 to -3 (Figure 3 reports the corresponding calibration curve). Importantly, these results confirm that the proposed potentiometric cell -using Nafion to connect WE and RE instead of the solution- effectively closes the circuit and allows detecting H2O2 in solution. To the best of our knowledge, this is the first report for this kind of configuration for the detection of chemical species in solution.

Moreover, the novel configuration allows detection in reduced volume such as shown in Figure 2 right. The detection was performed in a single drop of 50 $\mu$L reducing the volume 2 order of magnitude. Noteworthy further reduction of volume down to the single $\mu$L is possible based on the geometry optimization. Analytical figures are comparable to the ones in solution although with a shifted linear range. The sensitivity here was 100 mV/dec in the -4 -2 linear range. Furthermore, the linear range corresponds to the clinical range of blood glucose and it is therefore of utmost importance.

### Glucose detection

In addition, a glucose sensor was constructed: GOx enzyme was entrapped in the first layer of Nafion so that it catalyzes the oxidation of glucose added to the solution producing H2O2, which is detected by the working electrode. Figure 4a. shows the time trace obtained in artificial serum (AS). As expected, the measured EMF decreases with the increasing concentration of glucose (sensitivity of -53 mV/dec in the linear range -3.5 -2.5). Thus, this result confirms that the new configuration could be used for real application having an analytical performance similar to other reported glucose biosensors.

## Claims

1. A potentiometric cell suitable for selectively measuring hydrogen peroxide in solution, which comprises:

   a. A reference electrode comprising a support which in turn comprises a conductive material; and
   b. A hydrogen peroxide selective electrode comprising a porous redox sensitive surface consisting of platinum or gold,

   wherein the hydrogen peroxide selective electrode is positioned directly above the reference electrode, wherein each of the electrodes is connected to the other by a polyelectrolyte bridge provided between the electrodes, and wherein the surfaces of each of the electrodes that contact the polyelectrolyte bridge provided between the electrodes permits to effectively close the circuit allowing the detection of the chemical species in solution; and
   wherein the polyelectrolyte bridge connecting the electrodes comprises or is made of polyelectrolytes such as perfluorosulfonic acid ionomers or polyammonium ionomers.

2. The potentiometric cell of claim 1, wherein the hydrogen peroxide selective electrode comprises a porous redox sensitive surface consisting of platinum.

3. The potentiometric cell of claim 1 or 2, wherein the polyelectrolyte bridge connecting the electrodes comprises or is made of perfluorosulfonic acid ionomers.

4. The potentiometric cell of claim 3, wherein the polyelectrolyte bridge connecting the electrodes comprises or is made of Nafion or Aquivion, preferably Nafion.

5. The potentiometric cell of claim 3, wherein the polyelectrolyte bridge connecting the electrodes comprises or is made of Nafion.

6. The potentiometric cell of any of the previous claims, wherein the reference electrode comprises a support which in turn comprises a conductive material selected from any of the following list consisting of: silver, platinum, gold, nickel, zinc, copper, aluminum and carbon.

7. The potentiometric cell according to the any of the precedent claims, wherein the hydrogen peroxide selective

electrode comprises a porous redox sensitive surface consisting of platinum or gold and at least one layer of a proton exchange membrane on said redox sensitive surface, wherein said layer of a proton exchange membrane comprises a copolymer of Formula (II),

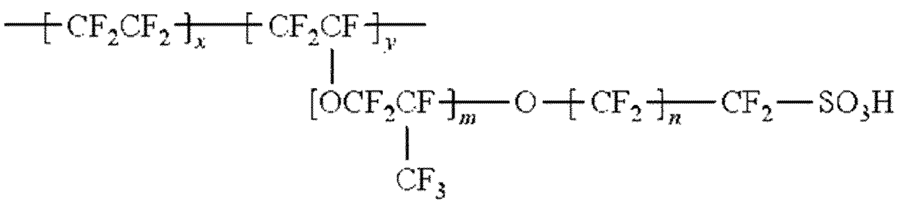

(II)

wherein x, y, m and n represent the numbers of repeat units, wherein m=0, n=1 and wherein the number of repeat units x and y are such that there are less than 15x units for each y.

**8.** The potentiometric cell according to claim 7, wherein said layer of a proton exchange membrane further comprises or conforms a mixture with a further PFSA copolymer selected from those of formula II wherein m=1 and n=1, or m=0 or 1 and n=1 to 5, or m=0 or 3 and n=2 to 5, or m=0 and n=2, and wherein x and y are such that there are less than 15x units for each y.

**9.** The potentiometric cell according to claim 7 or 8, wherein said layer of a proton exchange membrane further comprises a glucose oxidase entrapped therein or any oxidase with hydrogen peroxide as its product.

**10.** *In vitro* use of the potentiometric cell of any of the precedent claims, to selectively and directly determine the concentration of hydrogen peroxide in an aqueous solution.

**11.** The in vitro use according to claim 10, wherein said aqueous solution is a biological fluid such as whole blood, preferably undiluted whole blood, intracellular fluids, saliva, cerebrospinal fluid, blood sera, blood plasma, sweat and urine.

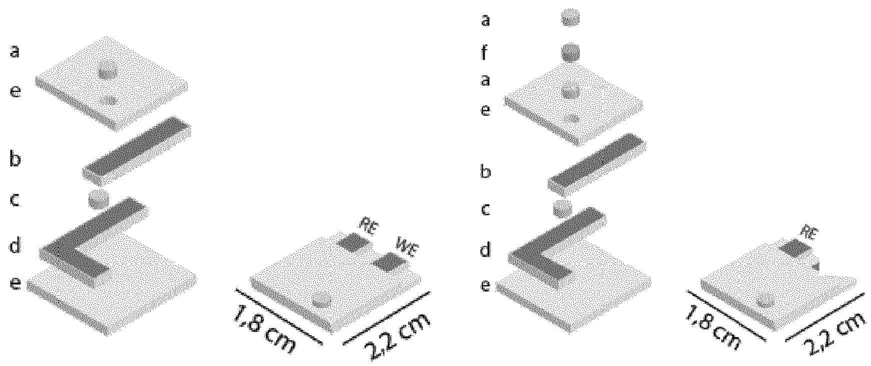


Fig. 1

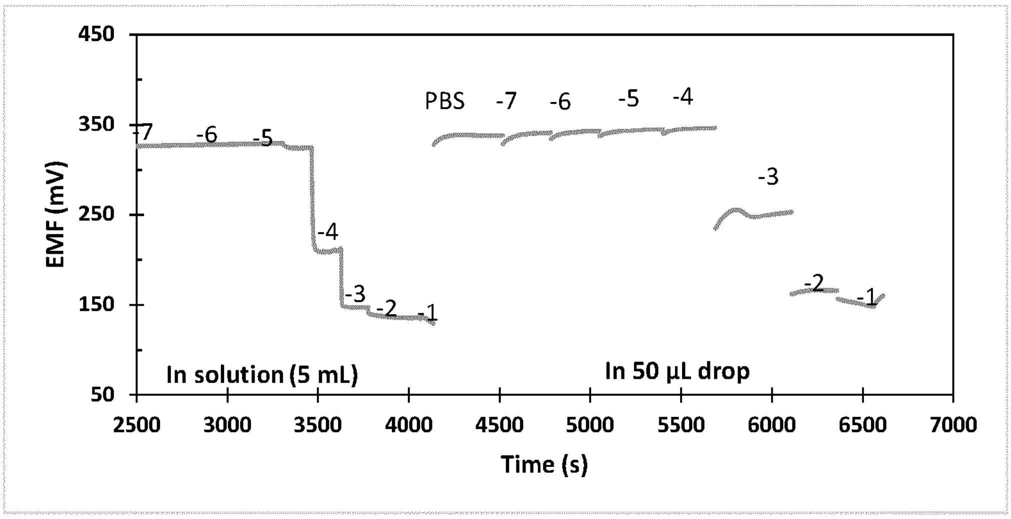


Fig. 2

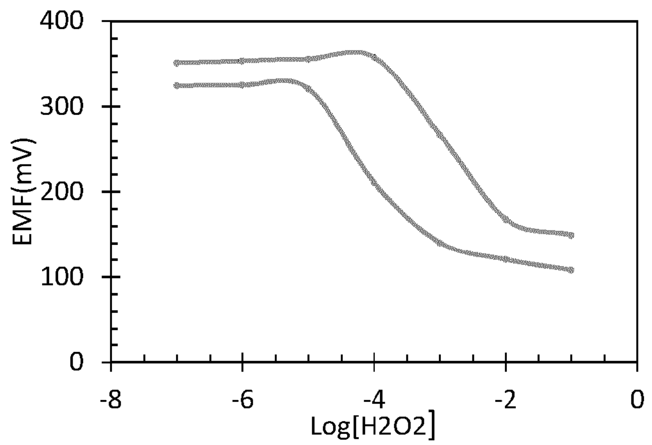


Fig. 3

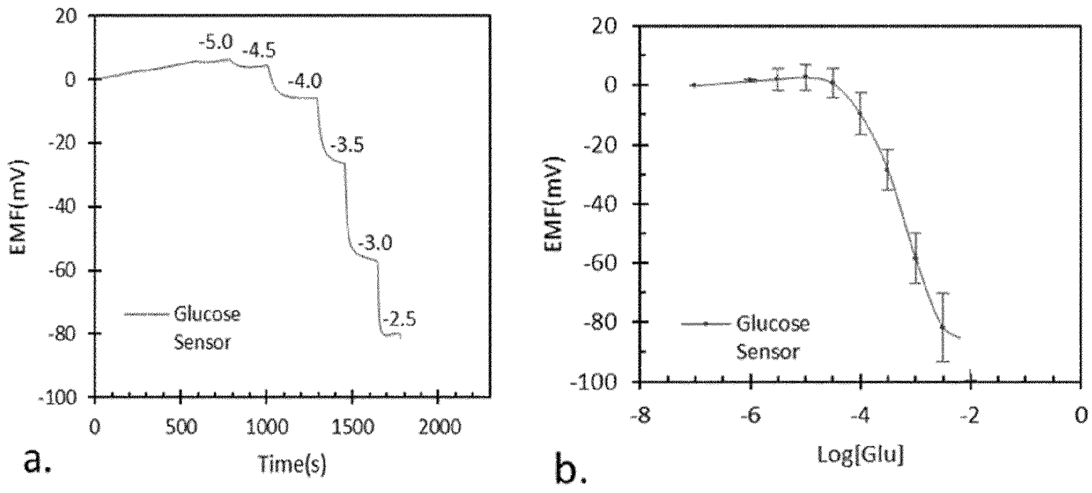


Fig. 4

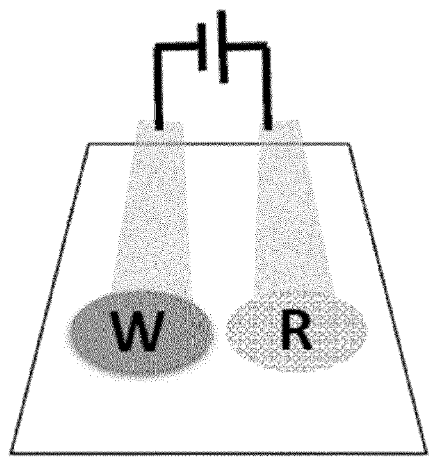


Fig. 5

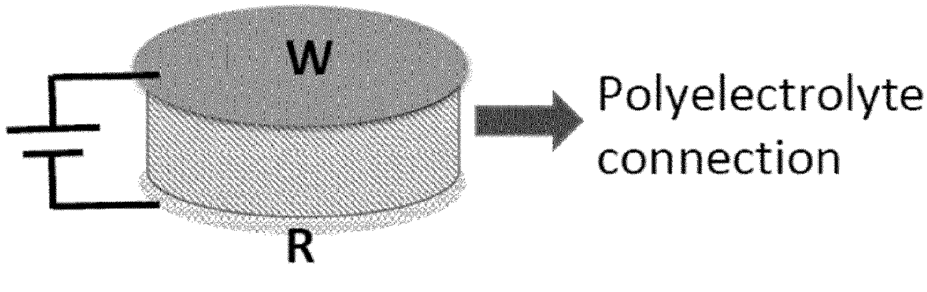


Fig. 6

Europäisches Patentamt
European Patent Office
Office européen des brevets

# EUROPEAN SEARCH REPORT

Application Number
EP 20 38 2133

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 5 312 590 A (GUNASINGHAM HARI [SG]) 17 May 1994 (1994-05-17)<br>* fig. 1 and corresponding text passages *<br>* claims 4,11 *<br>* column 1, line 40 ff. * | 1-6,10, 11<br>7-9 | INV.<br>G01N27/404<br>G01N27/327 |
| X | US 2007/042377 A1 (GAO ZHIQIANG [SG] ET AL) 22 February 2007 (2007-02-22)<br>* claim 27 *<br>* examples 1,2 *<br>* table 1 *<br>* claim 11 *<br>* [0042,0053] * | 1,2,6, 10,11 | |
| X | US 2017/184537 A1 (UMASANKAR YOGESWARAN [US] ET AL) 29 June 2017 (2017-06-29)<br>* [0099,0106] *<br>* fig. 1 and corresponding text passages * | 1-6,10, 11 | |
| X | US 2004/134780 A1 (INOUE TOMOHIRO [JP] ET AL) 15 July 2004 (2004-07-15)<br>* fig. 1 and corresponding text passages *<br>* [0083] * | 1-6 | TECHNICAL FIELDS SEARCHED (IPC)<br>G01N |
| A,D | BAEZ JHONATTAN F ET AL: "Controlling the mixed potential of polyelectrolyte-coated platinum electrodes for the potentiometric detection of hydrogen peroxide", ANALYTICA CHIMICA ACTA, ELSEVIER, AMSTERDAM, NL, vol. 1097, 13 November 2019 (2019-11-13), pages 204-213, XP085974484, ISSN: 0003-2670, DOI: 10.1016/J.ACA.2019.11.018 [retrieved on 2019-11-13]<br>* the whole document * | 1-11 | |

-/--

The present search report has been drawn up for all claims

1

| Place of search | Date of completion of the search | Examiner |
|---|---|---|
| Munich | 24 July 2020 | Klein, Marc-Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 20 38 2133

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WEI-CHE LEE ET AL: "Simple fabrication of glucose biosensor based on Graphene-Nafion composite by amperometric detections", 2013 IEEE SENSORS, IEEE, 28 October 2012 (2012-10-28), pages 1-4, XP032308614, ISSN: 1930-0395, DOI: 10.1109/ICSENS.2012.6411155 * abstract * ----- | 7-9 | |
| A | TANMAY KULKARNI ET AL: "Application of Semipermeable Membranes in Glucose Biosensing", MEMBRANES, vol. 6, no. 4, 14 December 2016 (2016-12-14), page 55, XP055600232, CH ISSN: 2077-0375, DOI: 10.3390/membranes6040055 * Chapter 5.2: Nafion-Based Membranes * ----- | 9 | |

TECHNICAL FIELDS SEARCHED (IPC)

1 The present search report has been drawn up for all claims

| Place of search | Date of completion of the search | Examiner |
|---|---|---|
| Munich | 24 July 2020 | Klein, Marc-Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO. EP 20 38 2133

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2020

| Patent document cited in search report | Publication date | Patent family member(s) | Publication date |
|---|---|---|---|
| US 5312590 A | 17-05-1994 | NONE | |
| US 2007042377 A1 | 22-02-2007 | AU 2004284368 A1 | 06-05-2005 |
| | | CN 1875114 A | 06-12-2006 |
| | | EP 1685258 A1 | 02-08-2006 |
| | | JP 2007510155 A | 19-04-2007 |
| | | SG 135191 A1 | 28-09-2007 |
| | | TW I290224 B | 21-11-2007 |
| | | US 2007042377 A1 | 22-02-2007 |
| | | WO 2005040404 A1 | 06-05-2005 |
| US 2017184537 A1 | 29-06-2017 | NONE | |
| US 2004134780 A1 | 15-07-2004 | AT 521888 T | 15-09-2011 |
| | | AU 2002258227 A1 | 09-12-2002 |
| | | CN 1511255 A | 07-07-2004 |
| | | EP 1393054 A1 | 03-03-2004 |
| | | ES 2372380 T3 | 19-01-2012 |
| | | JP 4141381 B2 | 27-08-2008 |
| | | JP 2005503541 A | 03-02-2005 |
| | | KR 20040020904 A | 09-03-2004 |
| | | US 2004134780 A1 | 15-07-2004 |
| | | WO 02097420 A1 | 05-12-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **BAEZ et al.** *Analytica Chimica Acta,* 2020, vol. 1097, 204-213
- **I KATSOUNAROS ; WB SCHNEIDER ; JC MEIER ; U BENEDIKT ; PU BIEDERMANN ; AAAUER ; KJJ MAYRHOFER.** *Phys. Chem. Chem. Phys.,* 2012, vol. 14, 7384
- **NM MARKOVIC ; PN ROSS JR.** *Surface Science Reports,* 2002, vol. 45, 117